Europäisches Patentamt

**European Patent Office**

**Office européen des brevets**

(19)

(11) Veröffentlichungsnummer : **0 007 433**
**B2**

(12)

# NEUE EUROPÄISCHE PATENTSCHRIFT

(45) Veröffentlichungstag der neuen Patentschrift :
29.07.87

(51) Int. Cl.⁴ : **H 01 G   4/22**

(21) Anmeldenummer : 79102013.4

(22) Anmeldetag : 18.06.79

(54) Imprägnierter elektrischer Kondensator und Verfahren zu dessen Herstellung.

(30) Priorität : 20.06.78 DE 2827023

(43) Veröffentlichungstag der Anmeldung :
06.02.80 Patentblatt 80/03

(45) Bekanntmachung des Hinweises auf die Patenterteilung : 11.08.82 Patentblatt 82/32

(45) Bekanntmachung des Hinweises auf die Entscheidung
über den Einspruch : 29.07.87 Patentblatt 87/31

(84) Benannte Vertragsstaaten :
CH FR GB IT SE

(56) Entgegenhaltungen :
CH-A-   504 768
DE-A- 1 564 792
DE-A- 1 922 822
DE-A- 2 364 722
DE-A- 2 604 004
DE-B- 1 815 478
DE-B- 2 109 233
LUEGER-Lexikon der Technik, Band 9, Deutsche
Verlags-Anstalt Stuttgart, 1968, S. 123-125
DIN 4760, Juli 1962
DIN 4762 Blatt 1, August 1960
DIN 4768 Blatt 1, August 1974
JIS B 0601-1976, International Organisation for Standardization ISO/TC 57/SC4 N 73
Oberflächenmessgrössen DIN-ISO mit Hommel Tester, Hommelwerke GmbH, Schwemmingen

(73) Patentinhaber : **Siemens Aktiengesellschaft Berlin
und München
Wittelsbacherplatz 2
D-8000 München 2 (DE)**

(72) Erfinder : **Rheindorf, Hans Heinz, Dipl.-Phys.
Stettiner Strasse 33
D-7922 Herbrechtingen (DE)**
Erfinder : **Schreiber, Friedewald, Dipl.-Phys.
Fichtenweg 10
D-7924 Steinheim (DE)**

# 0 007 433

**Beschreibung**

Die Erfindung betrifft einen imprägnierten elektrischen Kondensator gemäß dem Oberbegriff des Patentanspruches 1, sowie ein Verfahren zu dessen Herstellung.

Aus der DE-AS 15 64 792 ist ein imprägnierter elektrischer Wickel-Kondensator bekannt, dessen Dielektrikum aus mit Mineralöl imprägnierten aufgequollenen Polypropylenfolien besteht und dessen Elektroden aus beidseitig metallisierten Papierbändern bestehen, die im feldfreien Raum angeordnet sind. Die Polypropylenfolien des Kondensators weisen bevorzugt eine Mindestquellung von 0,3 µm auf, wobei die Quellung der Folien so bemessen ist, daß nach vollendeter Aufquellung praktisch keine Rest-Imprägnierspalte im Wickel vorhanden sind. Hierdurch kann die Schwierigkeit auftreten, daß die Nachimprägnierung des Wickels nicht mehr gewährleistet ist. Die Nachimprägnierung ist erforderlich, wenn der Kondensator im Betrieb Temperaturwechseln unterworfen ist bzw. wenn durch Teildurchschläge eine Gasentwicklung eintritt. Bei beiden Prozessen können Hohlräume im Wickel entstehen, an denen Teilentladungen einsetzen können, wenn kein Imprägniermittel in die entstandenen Hohlräume eindringen kann. Weiterhin kann bei Temperaturerhöhungen der Druck im Wickel so zunehmen, daß die Folien bzw. Papierbänder zerreißen.

Aufgabe der Erfindung ist es, einen Kondensator der eingangs genannten Art anzugeben, bei dem diese Schwierigkeiten nicht auftreten. Diese Aufgabe wird erfindungsgemäß mit den kennzeichnenden Teilen des Patentanspruches 1 gelöst.

Zweckmäßige Ausgestaltungen der Erfindung sind in den Unteransprüchen angegeben.

Die Vorteile des erfindungsgemäßen Kondensators werden an Hand von Ausführungsbeispielen aufgezeigt.

Ein Kondensator, dessen Dielektrikum aus Polypropylenfolien besteht weist Elektroden auf, die aus beidseitig mit regenerierfähigen dünnen Metallbelägen versehenen Papierbändern bestehen, wobei die Papierbänder im feldfreien Raum angeordnet sind.

Bei Verwendung von Polypropylenfolien, die kleiner oder gleich 8 µm dick sind, werden vorzugsweise Papierbänder mit dem Satinagegrad A, bei Polypropylenfolien der Dicke 8 bis 10 µm solche des Satinagegrades B und bei Polypropylenfolien, die gleich oder dicker als 10 µm sind, Papierbänder des Satinagegrades C verwickelt.

Die Dicke der Papierbänder ist vorzugsweise größer als oder gleich der Dicke der Polypropylenfolien. Bevorzugte Bereiche sind der folgenden Tabelle zu entnehmen.

| Polypropylenfolie µm | Papierband µm |
|---|---|
| 6 | 8 bis 9 |
| 8 | 9 |
| 10 | 10 |
| 12 | 12 |
| 15 | 15 |

Die Papierbänder werden bevorzugt in « feuchtem » Zustand verwickelt, wobei beispielsweise das Papier einen Wassergehalt von $\geqslant$ 5 Gew.% aufweist.

Vor der Imprägnierung erfolgt dann eine Trocknung, wobei die Papierbänder schrumpfen, so daß sich der Luftspalt, der bereits beim Wickeln entstanden ist, vergrößert. Der entstandene Luftspalt ist so zu bemessen, daß bei der nachfolgenden Aufquellung der Polypropylenfolien und der Imprägnierung ein Rest-Imprägnierspalt erhalten bleibt.

Bei Verwendung eines Mineralöls als Imprägnieröl, das wasserstoffbindende aromatische Anteile, sowie naphthenische und paraffinische Anteile enthält, erhält man den gewünschten Rest-Imprägnierspalt von ca. 0,1 µm.

Die Quellung der Polypropylenfolien ist bevorzugt so, daß bei Dicken der Folien, die kleiner oder gleich 8 µm betragen, die Folienquellung kleiner 8 % und bei Folien mit Dicken größer 8 µm die Quellung kleiner 5 % beträgt.

Als Dicke des Rest-Imprägnierspalts im Sinne der Erfindung ist eine mittlere Dicke gemeint, die durch eine gemittelte Linie definiert wird, die aus den « Rauhigkeiten » der Papier- und Kunststoffoberflächen resultiert.

Durch den Rest-Imprägnierspalt ist gesichert, daß der Kondensator bei Temperaturwechseln bzw. Teildurchschlägen nachimprägniert wird.

Die Rest-Imprägnierspalte können auch erhalten werden, indem beim Wickeln des Kondensators ein entsprechend geringerer Wickelzug ausgeübt wird bzw. durch Verwendung von Papier und/oder Kunststoffbändern, deren Oberflächen eine große Rauhigkeit aufweisen. Die genannten Maßnahmen können weiterhin kombiniert angewandt werden.

Weitere Ausführungsformen des Kondensators gemäß der Erfindung bestehen beispielsweise auf einer Kunststoffolie und dazu parallel liegendem Papier als Dielektrikum, wobei die Elektroden aus

2

regenerierfähigen Metallbelägen bestehen, die auf das Papier aufgedampft sind bzw. aus einem Wickel aus einer quellfähigen Kunststoffolie und Papierbändern, wobei die Elektroden aus Metallfolien gebildet sind.

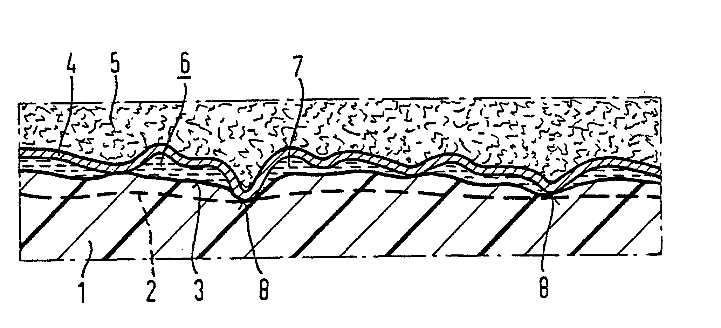

In der Figur ist dargestellt, wie die Polypropylenfolie 1 mit ihrer ursprünglichen Oberfläche 2 durch die Einwirkung des Imprägniermittels 7 so aufquillt, daß die Oberfläche 3 entsteht, die von dem Metallbelag 4 des Papierbandes 5 um den mittleren Abstand des Rest-Imprägnierungspaltes 6 entfernt ist. Im Rest-Imprägnierspalt 6 befindet sich das Imprägniermittel 7. Die Spitzen 8 des Metallbelags 4 sind punktförmig, so daß das Imprägniermittel 7 sich frei ausbreiten kann.

## Patentansprüche

1. Imprägnierter elektrischer Wickelkondensator, dessen Wickel durch das Imprägniermittel gequollene Kunststoffolien und Papierbänder enthält, dadurch gekennzeichnet, daß im Wickelkörper zwischen dem festen Dielektrikum und den Elektroden mit Imprägniermittel gefüllte Rest-Imprägnierspalte mit einer mittleren Dicke von ca. 0,1 $\mu$m vorhanden sind.

2. Elektrischer Kondensator nach Anspruch 1 dadurch gekennzeichnet, daß die Kunststoffolie aus Polypropylen und die Elektroden aus beidseitig mit regenerierfähigen Metallbelägen versehenen Papierbändern bestehen und daß die Papierbänder im feldfreien Raum angeordnet sind.

3. Elektrischer Kondensator nach Anspruch 1, dadurch gekennzeichnet, daß das Dielektrikum aus Polypropylen und zum Polypropylen parallel liegendem Papier besteht und daß die Elektroden aus regenerierfähigen Metallbelägen bestehen, die auf das Papier aufgedampft sind.

4. Elektrischer Kondensator nach den Ansprüchen 1 bis 3, dadurch gekennzeichnet, daß die Dicke der Papierbänder größer oder gleich der Dicke der Polypropylenfolien ist.

5. Verfahren zur Herstellung eines elektrischen Kondensators nach den Ansprüchen 1 bis 4, dadurch gekennzeichnet, daß die Rest-Imprägnierspalte durch den Wickelzug bzw. die Rauhigkeit der Kunststoffolie und/oder der Papierbänder bzw. durch Verwickeln feuchter Papierbänder und anschließendes Trocknen vor dem Imprägnieren eingestellt werden.

6. Verfahren nach Anspruch 5, dadurch gekennzeichnet, daß die Rest-Imprägnierspalte durch Kombinieren entsprechend satinierter bzw. rauher Papiere mit Polypropylenfolien eingestellt werden, wobei vorzugsweise Satinagegrad A bei Folien der Dicke kleiner gleich 8 $\mu$m, Satinagegrad B bei Folien von 8 bis 10 $\mu$m, und Satinagegrad C bei Folien dicker als 10 $\mu$m verwendet werden.

## Claims

1. An impregnated wound electrical capacitor, the roll of which contains paper tapes and plastics films which are swollen by means of the impregnating agent, characterised in that residual impregnating gaps having an average thickness of about 0.1 $\mu$m and which are filled with impregnating agent are present in the roll body between the solid dielectric and the electrodes.

2. An electrical capacitor as claimed in Claim 1, characterised in that the plastics films consists of polypropylene and the electrodes consist of paper tapes which are provided on both sides with regenerable metal coating, and that the paper tapes are arranged in the field-free space.

3. An electrical capacitor as claimed in Claim 1, characterised in that the dielectric consists of polypropylene and of paper arranged parallel to the polypropylene, and that the electrodes consist of regenerable metal coatings which are vapour-deposited on the paper.

4. An electrical capacitor as claimed in Claims 1 to 3, characterised in that the thickness of the paper tapes is greater than or equal to the thickness of the polypropylene films.

5. A process for the production of an electrical capacitor as claimed in Claims 1 to 4, characterised in that the residual impregnating gaps are set by the winding tension and/or the roughness of the plastics film and/or the paper tapes, and/or by winding damp paper tapes and subsequently drying them before impregnation.

6. A process as claimed in Claim 5, characterised in that the residual impregnating gaps are set by combining suitable glazed and rough papers with polypropylene films, wherein preferably glazed paper Grade A is used with films of a thickness which is smaller than or equal to 8 $\mu$m, glazed paper Grade B with films of 8 to 10 $\mu$m and glazed paper Grade C with films which are thicker than 10 $\mu$m.

## Revendications

1. Condensateur électrique enroulé et imprégné dont l'enroulement contient des feuilles de matière plastique gonflées par l'agent d'imprégnation et des bandes de papier, caractérisé en ce que le corps d'enroulement présente, entre le diélectrique solide et les électrodes, des intervalles d'imprégnation résiduels qui sont emplis d'agent d'imprégnation et qui ont une épaisseur moyenne des 0,1 $\mu$m.

2. Condensateur électrique suivant la revendication 1, caractérisé en ce que les feuilles de matière plastique sont en polypropylène et les électrodes en bandes de papier pourvues des deux côtés de couches métalliques capables de régénération et en ce que les bandes de papier sont disposées dans l'espace dépourvu de champ.

3. Condensateur électrique suivant la revendication 1, caractérisé en ce que le diélectrique est en polypropylène et en papier disposé parallèlement au polypropylène et en ce que les électrodes sont constituées par des couches métalliques capables de régénération et qui sont déposées sur le papier par dépôt en phase vapeur.

4. Condensateur électrique suivant l'une des revendications 1 à 3, caractérisé en ce que l'épaisseur des bandes de papier est supérieure ou égale à celle des feuilles de polypropylène.

5. Procédé pour la fabrication d'un condensateur électrique suivant les revendications 1 à 4, caractérisé en ce qu'il consiste à régler les intervalles d'imprégnation résiduels par la traction d'enroulement ou par la rugosité de la feuille de matière plastique et/ou des bandes de papier ou par enroulement de bandes de papier humide et suivi d'un séchage avant l'imprégnation.

6. Procédé suivant la revendication 5, caractérisé en ce qu'il consiste à régler les intervalles d'imprégnation résiduels en combinant des papiers satinés ou rugueux à des feuilles de polypropylène, en utilisant de préférence un degré de satinage A pour des feuilles dont l'épaisseur est inférieure à 8 $\mu$m, un degré de satinage B pour des feuilles dont l'épaisseur est comprise entre 8 et 10 $\mu$m et un degré de satinage C pour des feuilles dont l'épaisseur est supérieure à 10 $\mu$m.